# EUROPÄISCHE PATENTSCHRIFT

(11) **EP 4 077 050 B1**
(45) Veröffentlichungstag und Bekanntmachung des Hinweises auf die Patenterteilung: **06.03.2024**
(21) Anmeldenummer: 20830306.5
(22) Anmeldetag: 02.12.2020
(51) Int. Cl.: B60R 1/00, B60R 11/04, B62D 53/08

(54) **SATTELKUPPLUNG MIT EINER KAMERA**
FIFTH WHEEL COUPLING WITH A CAMERA
COUPLAGE DE SELLETTE D'ATTELAGE À UNE CAMÉRA

(30) Priorität: 20.12.2019 DE 102019008919
(43) Veröffentlichungstag der Anmeldung: 26.10.2022
(73) Patentinhaber: JOST-Werke Deutschland GmbH, 63263 Neu-Isenburg (DE)
(72) Erfinder: GITZEN, Stephan, 64560 Riedstadt (DE); MÜLLER, Mark, 60486 Frankfurt (DE); SAUPE, Swen, 55126 Mainz (DE)
(74) Vertreter: Straubel, Dirk
(86) Internationale Anmeldenummer: PCT/IB2020/061375
(87) Internationale Veröffentlichungsnummer: WO 2021/123991

(56) Entgegenhaltungen:
- DE-A1-102004 029 130
- DE-A1-102004 048 139
- US-A1- 2014 151 979
- US-B1- 9 357 114

## Beschreibung

Die Erfindung betrifft eine Sattelkupplung mit einer Kamera gemäß der im Oberbegriff des Anspruchs 1 stehenden Merkmale.

Die Sattelkupplung ist üblicherweise auf einem Zugfahrzeug angeordnet und dient dazu, einen Auflieger mittels eines daran befestigten Königszapfens mechanisch mit dem Zugfahrzeug zu verbinden. Hierfür weist die Sattelkupplung eine Kupplungsplatte auf, die über Lagerungselemente an dem Zugfahrzeug abgestützt ist und an deren Unterseite üblicherweise eine Verschlussmechanik zur Verriegelung des Königszapfens vorgesehen ist. Während des Ankuppelns nähert sich das Zugfahrzeug rückwärts an den stehenden Auflieger an, so dass der Königszapfen in eine Einfahröffnung der Sattelkupplung gelangt und von dort bis zum Erreichen seiner Endlage in einem Verschlussbereich geführt ist.

Mit Hilfe einer am Zugfahrzeug befestigten Kamera soll die Annäherung des Zugfahrzeugs an den Auflieger für den Fahrer vereinfacht oder sogar automatisiert durchgeführt werden. Die US 2014/0151979 A1 schlägt hierfür eine Anbringung der Kamera auf einer eigens für die Kamera zwischen den Holmen des Zugfahrzeugs angeordneten Quertraverse vor, welche in Fahrzeuglängsrichtung zwischen der Sattelkupplung und dem Heck des Zugfahrzeugs angeordnet ist. Die Kamera kann hierdurch mittig in der Fahrzeuglängsachse ausgerichtet sein und soll dadurch eine exakte Annäherung des Zugfahrzeugs in Richtung des Aufliegers ermöglichen. Als nachteilig hat sich jedoch herausgestellt, dass sich die Kamera hinter den Rädern des Zugfahrzeugs befindet und besonders stark aufgewirbeltem Schmutz ausgesetzt ist, der zu einer erheblichen optischen Beeinträchtigung der Kamera führt. Überdies führt eine endseitige Position der Kamera am Heck des Zugfahrzeugs dazu, dass die Kamera bei ausgefahrener Luftfederung während des Ankuppelns vom Königszapfen leicht getroffen und zerstört werden kann. Da die rückwärtig ausgerichtete Kamera sehr früh vom Königszapfen überfahren und die Naherkennung des Königszapfens bei Eintritt in die Einfahröffnung der Kupplungsplatte von der Kamera nicht mehr erfasst wird, ist eine zweite, vorwärts ausgerichtete Kamera notwendig, die das Gesamtsystem verhältnismäßig teuer macht.

Einen anderen Stand der Technik bildet die DE 10 2004 029 130 A1 mit einer Kamera, die unter oder in der Sattelkupplung angeordnet sein soll, um aufgrund der zentrischen Position der Kamera den Königszapfen wesentlich leichter detektieren zu können, als wenn die Kamera seitlich an der Sattelkupplung angebracht wäre. Eine in der Fahrzeuglängsachse befindliche Kameraposition hat jedoch die nachteilige Konsequenz, dass sich die Kamera stets im Einwirkungsbereich des Königszapfens befindet und dadurch einem erhöhten Beschädigungsrisiko ausgesetzt ist. Überdies ist der zentrisch in der Kupplungsplatte angeordnete Verschlussbereich stets mit Schmierfett versorgt, welches fortwährend auf die Kamera gelangt und dort ebenfalls optische Beeinträchtigungen verursacht.

Der Erfindung lag daher die Aufgabe zugrunde, die Kamera in einer Position im Bereich der Sattelkupplung mit möglichst geringem Verschmutzungs- und Beschädigungsrisiko anzubringen.

Die Erfindung wird mit den Merkmalen des Anspruchs 1 gelöst. Demnach ist die Kamera nicht an der Kupplungsplatte, sondern einem mit der Kupplungsplatte direkt oder indirekt verbundenen Lagerungselement oder -bauteil verbunden. Typischerweise ist das Lagerungselement im Kraftfluss zwischen der Kupplungsplatte und dem Zugfahrzeug beziehungsweise dessen Fahrzeugrahmen angeordnet.

Zumindest ein Abschnitt der Kamera oder ein mit der Kamera verbundener Halter ist zumindest teilweise in einem Bereich zwischen der Kupplungsplatte und dem Fahrzeugrahmen vorgesehen oder ragt in diesen Bereich hinein, der typischerweise wegen der im Fahrbetrieb auftretenden Schwenkbewegungen der Kupplungsplatte um eine in Querrichtung verlaufende Schwenkachse unverbaut ist. Überdies fordern Speditionen und Hersteller von Zugfahrzeugen eine möglichst geringe Bauhöhe des gesamten Systems Sattelkupplung, um eine möglichst maximale Beladungshöhe seitens des Aufliegers realisieren zu können. Aufgrund der geringen Bauhöhe der Sattelkupplung ist der zur Verfügung stehende Bauraum unter der Kupplungsplatte auf ein Minimum reduziert.

Im Zuge der Entwicklung von immer kleineren Kameras mit ausreichend hoher Bildauflösung bietet eine Anbringung der Kamera an einem Lagerungselement der Kupplungsplatte eine besonders sichere Einbauposition für die Kamera in einem durch die Kupplungsplatte überdeckten Bereich.

Durch die Anbringung der Kamera an einem Lagerungselement der Sattelkupplung befindet sich diese in räumlicher Nähe zu der Endlage des in die Kupplung eingefahrenen Königszapfens, so dass dieser während des Ankuppelns möglichst lange für die Kamera sichtbar und die Phase eines nicht von der Kamera erkennbaren Königszapfens verhältnismäßig kurz ist.

Vorteilhafterweise ist die Kamera seitlich versetzt zu der Längsachse der Kupplungsplatte angeordnet und liegt damit außerhalb des Einwirkungsbereiches eines Königszapfens während des An- oder Abkuppelns eines Aufliegers. Besonders günstig ist eine Einbauposition in Querrichtung außerhalb der Einfahröffnung.

Gemäß einer ersten bevorzugten Ausführungsform ist das Lagerungselement aus zwei beidseitig des Verschlussbereiches angeordneten Lagerböcken gebildet und die Kamera an einem der Lagerböcke befestigt. Die Kupplungsplatte ist mittels der Lagerböcke an dem Zugfahrzeug abgestützt. Die Lagerböcke sind regelmäßig ortsfest am Zugfahrzeug befestigt und ermöglichen der Kupplungsplatte eine Relativbewegung um eine in Querrichtung verlaufende Schwenkachse. Ein wesentlicher Vorteil einer Anbringung der Kamera an den Lagerböcken besteht darin, dass diese keine Schwenkbewegung vollziehen und regelmäßig auch in der Längsachse der Kupplungsplatte fixiert sind. Die Kamera ist dadurch in einer zum Zugfahrzeug ortsfesten Position angebracht und lässt sich überdies besonders präzise kalibrieren. Aufgrund der bezüglich der Längsachse außermittigen Anbringung wird das Bild der Kamera während der Annäherung eines Aufliegers auch nicht durch Teile des Aufliegers, insbesondere den Königszapfen verdeckt.

Sinnvollerweise ist die Kamera von einem an einem der Lagerböcke angreifenden Lagerbockhalter getragen. Hierdurch wird ein von der Kamera ausgehender Sichtkegel noch weniger durch Komponenten der Sattelkupplung abgedeckt.

Die Kamera kann vorzugsweise mit Hilfe des Lagerbockhalters derart an dem Lagerbock angebracht sein, dass die Oberseite der Kamera eine Höhendifferenz zu der in Querrichtung daneben befindlichen Oberseite der Kupplungsplatte aufweist, die größer ist als der Überstand des Königszapfens bezüglich der ihn umgebenden Aufliegerplatte. Hierdurch ist sichergestellt, dass ein seitlich an der Kupplungsplatte vorbeistreichender Königszapfen stets über die Kamera hinwegfährt und diese nicht beschädigt. Der Überstand des Königszapfens beträgt üblicherweise 84 mm. Die Höhendifferenz zwischen Oberseite der Kupplungsplatte und Kamera sollte demnach größer als 84 mm sein.

Der Lagerbockhalter kann mindestens einen quer zur Längsachse ausgerichteten ersten Abschnitt aufweisen. Mit Hilfe dieses ersten Abschnittes ist die Position der Kamera bezüglich der Kupplungsplatte seitlich nach außen verlegt. Mithilfe eines zweiten Abschnittes des Lagerbockhalters, der parallel zur Längsachse der Kupplungsplatte ausgerichtet ist, kann die Position der Kamera zusätzlich nach hinten, in Richtung der freien Enden der Einfahrhörner verlegt sein. Aufgrund der winkligen Ausbildung des Lagerbockhalters liegt weder die Kamera noch der Lagerbockhalter im Schwenkbereich der Kupplungsplatte und es ist ein annähernd freies Sichtfeld der Kamera nach hinten möglich.

Günstigerweise ist der Lagerbockhalter derart ausgeführt, dass die Kamera stets außerhalb einer nach unten projizierten Fläche der Kupplungsplatte angeordnet ist. Hieraus resultiert der Vorteil, dass die Kamera nicht optisch von der Kupplungsplatte überdeckt oder im Fahrbetreib körperlich von der Kupplungsplatte durch eine Schwenkbewegung erfasst wird.

Gemäß einer zweiten bevorzugten Ausführungsform ist das Lagerungselement eine die zwei Lagerböcke verbindende Lagerbocktraverse. Bei der Lagerbocktraverse handelt es sich um einen separaten Profilträger, der zwischen den Lagerböcken angeordnet und fest mit diesen verbunden ist. Das Vorhandensein einer Lagerbocktraverse steift die Lagerböcke gegeneinander aus und ermöglicht einen Anbau der Sattelkupplung an ein Zugfahrzeug ohne eine Montageplatte, so dass die Lagerböcke entweder unmittelbar oder mittels eines Hilfsrahmens an dem Fahrzeugrahmen befestigt sein können. Folglich kann auch bei dieser Ausführungsform die Kamera ortsfest zum Zugfahrzeug angeordnet und besonders gut zu kalibrieren sein. Die Lagerbocktraverse ist grundsätzlich ortsfest zu dem Zugfahrzeug und/oder ortsfest zu den Lagerböcken angebracht. Es hat sich als besonders vorteilhaft herausgestellt, wenn die Lagerbocktraverse an gegenüberliegenden Endabschnitten jeweils an einem Lagerbock angreift.

Zweckmäßigerweise ist die Kamera an der Lagerbocktraverse zwischen den Lagerböcken angeordnet. Besonders bevorzugt ist hierbei eine Position in Querrichtung seitlich versetzt zu dem Verschlussbereich. Hieraus resultiert der Vorteil, dass ein in die oder aus der Kupplungsplatte bewegender Königszapfen ausreichend weit von der Kamera beabstandet ist, um eine Kollision zu vermeiden, und zudem im Fahrbetrieb kaum Schmierfett von der im Verschlussbereich der Kupplungsplatte verbauten Verschlussmechanik auf die Kamera gelangt.

Die Kamera kann beispielsweise von einem an der Lagerbocktraverse angreifenden Lagerbocktraversenhalter getragen sein. Vorteilhafterweise ist der Lagerbocktraversenhalter auf einer der Einfahröffnung zugewandten Seite an der Lagerbocktraverse angeordnet. Hierdurch ist es möglich, die Kamera bezüglich der Kupplungsplatte in Richtung der freien Enden der Einfahrhörner anzubringen. Dieses in insofern von Vorteil, als dass die Lagerbocktraverse unter dem Verschlussbereich hindurchläuft und dieser Bereich aufgrund der dort ebenfalls befindlichen Verschlussmechanik räumlich besonders ausgefüllt ist. Bei einer Kippbewegung der Kupplungsplatte nach hinten bestünde bei einer Anbringung der Kamera unmittelbar an der Lagerbocktraverse ein erhöhtes Risiko mit Bauteilen der Verschlussmechanik zu kollidieren und dadurch in Mitleidenschaft gezogen zu werden.

Gemäß einer dritten bevorzugten Ausführungsform ist das Lagerungselement eine Lagerbrücke, mit welcher die Kupplungsplatte an einem Lagerbock gehalten ist. Die Lagerbrücke befindet sich in unmittelbarer Nachbarschaft zu dem jeweiligen Lagerbock und somit in einem Bereich der durch die Lagerböcke verlaufenden Schwenkachse. Aufgrund des großen räumlichen Abstandes der Kamera zu der Einfahröffnung, dem Verschlussbereich und den freien Enden der Einfahrhörner handelt es sich um eine äußerst sichere Anbauposition für die Kamera. Darüber hinaus kann die Kamera sogar bei angekuppeltem Auflieger besonders gut inspiziert und gegebenenfalls repariert werden.

Günstigerweise ist die Lagerbrücke in Querrichtung durch den Lagerbock hindurchgeführt und mit der Unterseite der Kupplungsplatte verschraubt. Üblicherweise weist die Lagerbrücke eine U-Form auf, wobei die beiden freien Enden an der Kupplungsplatte festgelegt sind und ein abgewinkelter Abschnitt zwischen den freien Enden durch eine Öffnung des Lagerbocks hindurchgeführt ist.

Sinnvollerweise ist die Kamera von einem an der Lagerbrücke angreifenden Lagerbrückenhalter getragen. Der Lagerbrückenhalter ist insbesondere durch eine Schraubverbindung fest mit der Lagerbrücke verbunden. Der Lagerbrückenhalter dient dazu, die Kamera noch weiter von der Kupplungsplatte zu beabstanden, wodurch ein besonders weit gefächerter Sichtkegel der Kamera ohne eine Abdeckung durch die Kupplungsplatte realisierbar ist. Überdies ergeben sich weitere Vorteile im Hinblick auf die Erreichbarkeit der Kamera für Wartungs- und Reparaturzwecke.

Der Lagerbrückenhalter kann mit einem in Querrichtung verlaufenden ersten Abschnitt und mit einem in der Längsachse verlaufenden zweiten Abschnitt ausgebildet sein. Mit Hilfe des ersten, in Querrichtung verlaufenden Abschnitts des Lagerbrückenhalters kann die Position der Kamera seitlich der Kupplungsplatte und mit Hilfe des zweiten, in Längsrichtung verlaufenden Abschnitts des Lagerbrückenhalters kann die Position der Kamera in Richtung der freien Enden der Einfahrhörner bestimmt sein.

Gemäß einer vierten bevorzugten Ausführungsform ist das Lagerungselement eine Montageplatte. Die Montageplatte ist in der Regel von oben auf den Fahrzeugrahmen aufgesetzt und kraftschlüssig mit dem Fahrzeugrahmen verbunden. Die Lagerböcke stehen meistens mit ihrer Unterseite auf der Montageplatte. Der Kraftfluss verläuft von der Kupplungsplatte, über die Lagerböcke und die Montageplatte zu dem Fahrzeugrahmen. Die Montageplatte ermöglicht aufgrund ihrer flächenartigen Ausdehnung eine besonders große Auswahlmöglichkeit für die Position der Kamera. Ein weiterer Vorteil besteht darin, dass die geschlossene Fläche der Montageplatte verhindert, dass zugfahrzeugseitige Bauteile wie Leitungen oder Kabel seitens des Herstellers in den Sichtkegel der Kamera wandern können und das von der Kamera sichtbare Bild beeinträchtigen.

Vorteilhafterweise ist die Kamera an einer Oberseite der Montageplatte befestigt. Hieraus resultiert der Vorteil, dass die Kamera einen sich stets von oberhalb ihrer Position annähernden Königszapfen aufgrund einer fehlenden Überdeckung, insbesondere durch die geschlossene Montageplatte selbst, während des Ankuppelns länger erfassen kann. Überdies ragt die Kamera, wenn sie auf der Oberseite der Montageplatte angebaut ist, nicht in den Bauraum zwischen den Holmen des Fahrzeugrahmens, der von den Fahrzeugherstellern gerne für den Einbau und die Verlegung zugfahrzeugseitiger Komponenten freigehalten wird.

Die Kamera kann besonders günstig unter einem der Einfahrhörner angeordnet sein. In dieser Position ist die Kamera besonders sicher untergebracht, da der Auflieger eine weitgehend normierte frontseitige Kontur aufweist, von der während des Ankuppelvorgangs keine Bauteile in den bei Einbaulage vertikalen Bereich zwischen den Einfahrhörnern und der Montageplatte gelangen können. Andererseits reicht der Sichtkegel der Kamera in die freie Einfahröffnung hinein, so dass ein in die Kupplungsplatte einfahrender Königszapfen ausreichend lange erfasst ist.

Zum besseren Verständnis wird die Erfindung nachfolgend anhand von vier Figuren näher erläutert. Es zeigen die
- **Fig. 1**: eine perspektivische Ansicht einer Sattelkupplung gemäß einem ersten Ausführungsbeispiel mit einer an einem Lagerbock befestigten Kamera;
- **Fig. 2**: eine perspektivische Ansicht einer Sattelkupplung gemäß einem zweiten Ausführungsbeispiel mit einer an einer Lagerbocktraverse befestigten Kamera;
- **Fig. 3**: eine perspektivische Unteransicht auf einen Ausschnitt einer Sattelkupplung gemäß einem dritten Ausführungsbeispiel mit einer an einer Lagerbrücke befestigten Kamera und
- **Fig. 4**: eine perspektivische Ansicht auf eine Sattelkupplung gemäß einem vierten Ausführungsbeispiel mit einer an einer Montageplatte befestigten Kamera.

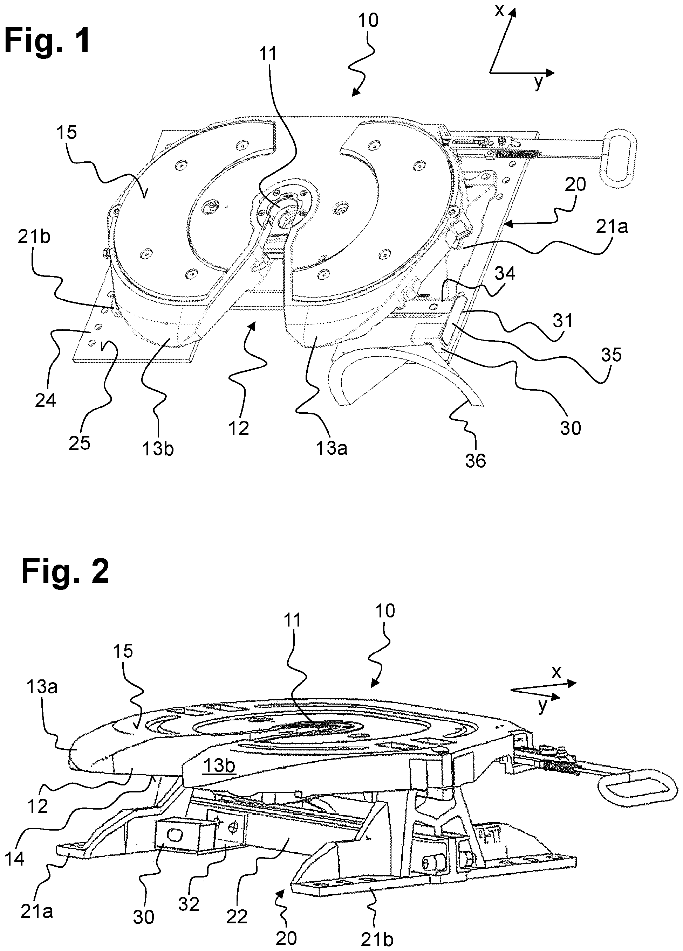

Die Fig. 1 zeigt in einer perspektivischen Ansicht eine Sattelkupplung aufweisend eine Kupplungsplatte 10 und ein Lagerungselement 20, mit welchem die Kupplungsplatte 10 an einem nicht gezeigten Zugfahrzeug befestigt ist.

Die Kupplungsplatte 10 dient der zugfahrzeugseitigen Verbindung mit einem Auflieger, dessen Königszapfen im Fahrbetrieb in einem Verschlussbereich 11 der Kupplungsplatte 10 drehbar gehalten ist. Während des An- oder Abkuppelns des Aufliegers gelangt der Königszapfen über eine radial in der Kupplungsplatte 10 ausgeformte Einfahröffnung 12 in und aus dem Verschlussbereich 11. Die Einfahröffnung ist zur seitlichen Führung des Königszapfens an ihrem dem Verschlussbereich 11 abgewandten Ende konisch aufgeweitet und in Querrichtung y der Kupplungsplatte 10 von zwei Einfahrhörnern 13a, 13b begrenzt.

Das Lagerungselement 10 der Sattelkupplung umfasst zwei Lagerböcke 21a, 21b und eine Montageplatte 24. Die Lagerböcke 21a, 21b sind in Querrichtung y beidseitig des Verschlussbereiches 11 der Kupplungsplatte 10 angeordnet und derart mit der Kupplungsplatte 10 verbunden, dass diese um die Querrichtung y schwenkbar gelagert ist. Beide Lagerböcke 21a, 21b stehen mit ihrer Unterseite auf der Montageplatte 24, welche in montierter Position auf einen Fahrzeugrahmen des Zugfahrzeugs aufgelegt ist. Das Lagerungselement 10 ist stets drehfest zu dem Zugfahrzeug angeordnet.

Gemäß der ersten, in Fig. 1 gezeigten Ausführungsform der Erfindung ist eine Kamera 30 an dem Lagerbock 21a befestigt. Hierfür greift an dem Lagerbock 21a lösbar ein Lagerbockhalter 31 an, welcher an seinem freien Ende mit der Kamera 30 verbunden ist. Der Lagerbockhalter 31 ist somit stets ortsfest zu dem Lagerbock 21a und dem Zugfahrzeug angeordnet.

Der Lagerbockhalter 31 weist einen ersten Abschnitt 34 auf, der sich in der Querrichtung y erstreckt und seitlich über die Außenseite des Lagerbocks 21a sowie die äußere Kontur der Kupplungsplatte 10 hinausragt, sowie einen zweiten Abschnitt 35, der sich in Längsrichtung x der Kupplungsplatte 10 auf der abgewandten Seite des Lagerbocks 21a erstreckt. Die Kamera 30 sowie der Lagerbockhalter 31 sind dadurch außerhalb des Schwenkbereichs der Kupplungsplatte 10 angeordnet und können im Fahrbetrieb oder während des Ankuppelns nicht von dieser erfasst werden. Darüber hinaus ist die Kamera 30 derart zur Kupplungsplatte 10 positioniert, dass ein Sichtkegel 36 der Kamera 30 unabhängig vom Kippwinkel der Kupplungsplatte 10 nicht von dem benachbarten Einfahrhorn 13a überdeckt ist.

In Fig. 2 ist eine zweite Ausführungsform der Erfindung dargestellt, bei welcher die Kamera 30 an einem anderen Lagerungselement 20 in Form einer Lagerbocktraverse 22 befestigt ist. Die Lagerbocktraverse 22 ist mit ihren Enden fest mit den Lagerböcken 21, 21b verbunden und versteift die Sattelkupplung soweit, dass notwendigerweise keine Montageplatte 24 verbaut zu werden braucht. Die Lagerbocktraverse 22 ist in der Querrichtung y ausgerichtet und läuft unter dem Verschlussbereich 11 der Kupplungsplatte 10 hinweg. Wie die Lagerböcke 21a, 21b ist auch die Lagerbocktraverse 22 ortsfest zum Zugfahrzeug angeordnet.

Die Kamera 30 ist mittels eines Lagerbocktraversenhalters 32 an der Lagerbocktraverse 22 befestigt. Die Kamera 30 befindet sich in der Querrichtung y seitlich versetzt zu der Einfahröffnung 12 und somit vorzugsweise unter einem der Einfahrhörner 13a. Hierdurch ist sichergestellt, dass die Kamera 30 auch bei einer Fehlstellung der Kupplungsplatte 10 oder des Königszapfens nicht von diesem erfasst und zerstört wird.

Die Unterseite der Lagerböcke 21a, 21b und/oder die Unterseite der Lagerbocktraverse 22 bilden eine Ebene, die bei montierter Sattelkupplung nicht unter das Niveau des Fahrzeugrahmens reicht, da die Hersteller diesen Bauraum typischerweise für eigene Aggregate und Aussteifungen des Fahrzeugrahmens nutzen. Auch die Kamera 30 ist von dem Lagerbocktraversenhalter 32 derart gehalten, dass weder der Lagerbocktraversenhalter 32 noch die Kamera 30 unter das Niveau der Lagerböcke 21a, 21b und/oder der Lagerbocktraverse 22 abgesenkt ist.

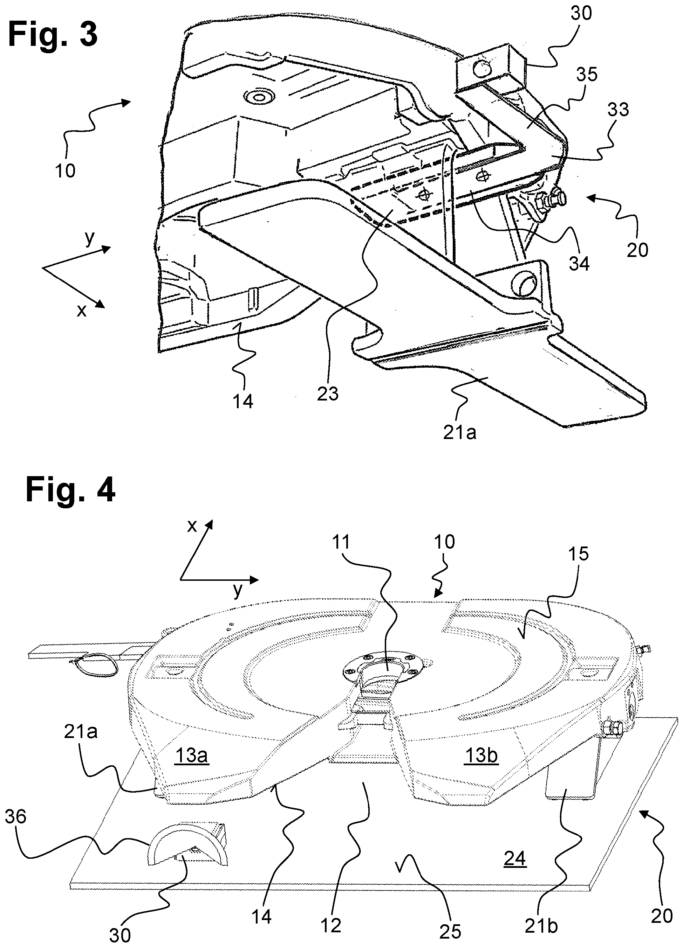

Die Fig. 3 zeigt eine dritte Ausführungsform der Erfindung, bei welcher die Kamera 30 an einem Lagerungselement 20 in Form einer Lagerbrücke 23 befestigt ist. Die Lagerbrücke 23 ist durch den Lagerbock 21a hindurchgeführt und beidseitig des Lagerbocks 21a mit der Kupplungsplatte 10 verbunden. Typischerweise weist die Lagerbrücke 23 eine U-Form auf, wobei die beiden freien Enden mit der Kupplungsplatte 10 verschraubt und der um 90° hierzu versetzt verlaufende Mittelabschnitt in einer Öffnung des Lagerbocks 21a anliegt. Die Lagerbrücke 23 verhindert ein Abheben der Kupplungsplatte 10 von dem jeweiligen Lagerbock 21a, 21b.

Die Kamera 30 ist von einem Lagerbrückenhalter 33 getragen, der lösbar mit der Lagerbrücke 23 verschraubt ist. Die Befestigung des Lagerbrückenhalters 33 an der Lagerbrücke 23 erfolgt an einem ersten Abschnitt 34 des Lagerbrückenhalters 33, der in der Querrichtung y der Kupplungsplatte 10 ausgerichtet ist und die Kamera 30 seitlich der äußeren Kontur der Kupplungsplatte 10 hält. Ein zweiter Abschnitt 35 des Lagerbrückenhalters 33 verläuft parallel zu der Längsachse x der Kupplungsplatte 10, wodurch die Kamera 30 neben dem benachbarten Einfahrhorn 13a, auf dessen der Einfahröffnung 12 abgewandten Seite gehalten ist. Die Kamera 30 ist stets unterhalb eines Niveaus einer Oberseite 15 der Kupplungsplatte 10 oder der Einfahrhörner 13a, 13b angeordnet. Aufgrund der Positionierung der Kamera 30 neben der Kupplungsplatte 10 befindet sich diese in einem bezüglich des Königszapfens geschützten Bereich außerhalb der Einfahrhörner 13a, 13b.

Die Fig. 4 verdeutlicht in einer perspektivischen Ansicht eine vierte Ausführungsform, bei der die Kamera 30 an einem Lagerungselement 20 in Form einer Montageplatte 24 befestigt ist. Um den freien Bauraum innerhalb des Fahrzeugrahmens freizuhalten, ist die Kamera 30 auf einer Oberseite 25 der Montageplatte 24 angebracht. Die Kamera 30 ist dabei in Einbaulage vertikal beabstandet zu einer Unterseite 14 der Kupplungsplatte 10 angeordnet, insbesondere zu deren Einfahrhörnern 13a, 13b.

Die Kamera 30 ist unter einem der Einfahrhörner 13a angeordnet und dadurch in der Längsachse x der Kupplungsplatte 10 vor einem sich annähernden Auflieger geschützt, der auch bei einem Fehlkuppeln stets mit den Einfahrhörnern 13a, 13b anstatt der Kamera 30 kollidieren würde. Ein in Querrichtung y falsch ausgerichteter Königszapfen des Aufliegers würde durch die Einfahrhörner 13a, 13b in der Einfahröffnung 12 gehalten oder auf den Außenseiten der Einfahrhörner 13a, 13b abstreifen, nicht aber die Kamera 30 kontaktieren.

### Bezugszeichenliste

- 10: Kupplungsplatte
- 11: Verschlussbereich
- 12: Einfahröffnung
- 13a,b: Einfahrhörner
- 14: Unterseite Kupplungsplatte
- 15: Oberseite Kupplungsplatte

- 20: Lagerungselement
- 21a,b: Lagerböcke
- 22: Lagerbocktraverse
- 23: Lagerbrücke
- 24: Montageplatte
- 25: Oberseite Montageplatte

- 30: Kamera
- 31: Lagerbockhalter
- 32: Lagerbocktraversenhalter
- 33: Lagerbrückenhalter
- 34: erster Abschnitt
- 35: zweiter Abschnitt
- 36: Sichtkegel Kamera

- x: Längsachse Kupplungsplatte
- y: Querrichtung Kupplungsplatte

## Patentansprüche

1. Sattelkupplung mit einer Kamera (30) umfassend eine Kupplungsplatte (10) und ein Lagerungselement (20), mit welchem die Kupplungsplatte (10) an einem Zugfahrzeug befestigbar ist, wobei die Kupplungsplatte (10) einen zentrisch angeordneten Verschlussbereich (11) zur Aufnahme eines Königszapfens sowie eine in einer Längsachse (x) verlaufende Einfahröffnung (12) aufweist, die beidseitig von zwei Einfahrhörnern (13a, 13b) begrenzt ist,
**dadurch gekennzeichnet,**
**dass** die Kamera (30) an dem Lagerungselement (20) befestigt ist.

2. Sattelkupplung nach Anspruch 1, **dadurch gekennzeichnet, dass** die Kamera (30) seitlich versetzt zu der Längsachse (x) angeordnet ist.

3. Sattelkupplung nach Anspruch 1 oder 2, **dadurch gekennzeichnet, dass** das Lagerungselement (20) aus zwei beidseitig des Verschlussbereiches (11) angeordneten Lagerböcken (21a, 21b) gebildet ist und die Kamera (30) an einem der Lagerböcke (21a) befestigt ist.

4. Sattelkupplung nach Anspruch 3, **dadurch gekennzeichnet, dass** die Kamera (30) von einem an einem der Lagerböcke (21a) angreifenden Lagerbockhalter (31) getragen ist.

5. Sattelkupplung nach Anspruch 4, **dadurch gekennzeichnet, dass** der Lagerbockhalter (31) mindestens einen quer zur Längsachse (x) ausgerichteten ersten Abschnitt (34) aufweist.

6. Sattelkupplung nach Anspruch 4 oder 5, **dadurch gekennzeichnet, dass** der Lagerbockhalter (31) derart ausgeführt ist, dass die Kamera (30) stets außerhalb einer nach unten projizierten Fläche der Kupplungsplatte (10) angeordnet ist.

7. Sattelkupplung nach Anspruch 1 oder 2, **dadurch gekennzeichnet, dass** das Lagerungselement (20) eine zwei Lagerböcke (21a, 21b) verbindende Lagerbocktraverse (22) ist.

8. Sattelkupplung nach Anspruch 7, **dadurch gekennzeichnet, dass** die Kamera (30) an der Lagerbocktraverse (22) zwischen den Lagerböcken (21a, 21b) angeordnet ist.

9. Sattelkupplung nach Anspruch 7 oder 8, **dadurch gekennzeichnet, dass** die Kamera (30) von einem an der Lagerbocktraverse (22) angreifenden Lagerbocktraversenhalter (32) getragen ist.

10. Sattelkupplung nach Anspruch 1 oder 2, **dadurch gekennzeichnet, dass** das Lagerungselement (20) eine Lagerbrücke (23) ist, mit welcher die Kupplungsplatte (10) an einem Lagerbock (21a, 21b) gehalten ist.

11. Sattelkupplung nach Anspruch 10, **dadurch gekennzeichnet, dass** die Lagerbrücke (23) in Querrichtung (y) durch den Lagerbock hindurchgeführt und mit der Unterseite (14) der Kupplungsplatte (10) verschraubt ist.

12. Sattelkupplung nach Anspruch 10 oder 11, **dadurch gekennzeichnet, dass** die Kamera (30) von einem an der Lagerbrücke (23) angreifenden Lagerbrückenhalter (33) getragen ist.

13. Sattelkupplung nach Anspruch 1 oder 2, **dadurch gekennzeichnet, dass** das Lagerungselement (20) eine Montageplatte (24) ist.

14. Sattelkupplung nach Anspruch 13, **dadurch gekennzeichnet, dass** die Kamera (30) an einer Oberseite (25) der Montageplatte (24) befestigt ist.

15. Sattelkupplung nach Anspruch 13 oder 14, **dadurch gekennzeichnet, dass** die Kamera (30) unter einem der Einfahrhörner (13a) angeordnet ist.

## Claims

1. A fifth wheel coupling with a camera (30), comprising a coupling plate (10) and a bearing element (20), with which the coupling plate (10) can be secured to a towing vehicle, wherein the coupling plate (10) has a centrally arranged locking region (11) for receiving a king pin, as well as an insertion opening (12) running along a longitudinal axis (x) and bordered on both sides by two insertion flanges (13a, 13b),
**characterized in that,**
the camera (30) being secured to the bearing element (20).

2. The fifth wheel coupling according to claim 1, **characterized in that** the camera (30) is arranged offset laterally to the longitudinal axis (x).

3. The fifth wheel coupling according to claim 1 or 2, **characterized in that** the bearing element (20) is formed from two bearing blocks (21a, 21b) arranged on both sides of the locking region (11) and the camera (30) is fastened to one of the bearing blocks (21a).

4. The fifth wheel coupling according to claim 3, **characterized in that** the camera (30) is carried by a bearing block holder (31) supported by one of the bearing blocks (21a).

5. The fifth wheel coupling according to claim 4, **characterized in that** the bearing block holder (31) has at least one first section (34) aligned transversely to the longitudinal axis (x).

6. The fifth wheel coupling according to claim 4 or 5, **characterized in that** the bearing block holder (31) is designed such that the camera (30) is always arranged outside a downwardly projected surface of the coupling plate (10).

7. The fifth wheel coupling according to claim 1 or 2, **characterized in that** the bearing element (20) is a bearing block traverse (22) connecting two bearing blocks (21a, 21b).

8. The fifth wheel coupling according to claim 7, **characterized in that** the camera (30) is arranged on the bearing block traverse (22) between the bearing blocks (21a, 21b).

9. The fifth wheel coupling according to claim 7 or 8, **characterized in that** the camera (30) is carried by a bearing blocks traverse holder (32) engaging the bearing blocks traverse (22).

10. The fifth wheel coupling according to claim 1 or 2, **characterized in that** the bearing element (20) is a bearing bridge (23) with which the coupling plate (10) is held on a bearing block (21a, 21b).

11. The fifth wheel coupling according to claim 10, **characterized in that** the bearing bridge (23) is passed through the bearing block in the transverse direction (y) and is screwed to the underside (14) of the coupling plate (10).

12. The fifth wheel coupling according to claim 10 or 11, **characterized in that** the camera (30) is carried by a bearing bridge holder (33) engaging the bearing bridge (23).

13. The fifth wheel according to claim 1 or 2, **characterized in that** the bearing element (20) is a mounting plate (24).

14. The fifth wheel coupling according to claim 13, **characterized in that** the camera (30) is attached to a top side (25) of the mounting plate (24).

15. The fifth wheel coupling according to claim 13 or 14, **characterized in that** the camera (30) is arranged under one of the insertion flanges (13a).

## Revendications

1. Couplage de sellette d'attelage à une caméra (30) comprenant une plaque de couplage (10) et un élément de palier (20) avec lequel la plaque de couplage (10) peut être fixée à un véhicule de remorquage, dans lequel la plaque de couplage (10) présente une zone de verrouillage (11) agencée centralement destinée à recevoir une cheville d'attelage, ainsi qu'une ouverture d'insertion (12) s'étendant le long d'un axe longitudinal (x) et bordée des deux côtés par deux brides d'insertion (13a, 13b),
**caractérisé en ce**
**que** la caméra (30) est fixée à l'élément de palier (20).

2. Couplage de sellette d'attelage selon la revendication 1, **caractérisé en ce que** la caméra (30) est disposée de manière latéralement décalée par rapport à l'axe longitudinal (x).

3. Couplage de sellette d'attelage selon la revendication 1 ou 2, **caractérisé en ce que** l'élément de palier (20) est formé de deux blocs de palier (21a, 21b) disposés de part et d'autre de la zone de verrouillage (11) et la caméra (30) est fixée à l'un des blocs de palier (21a).

4. Couplage de sellette d'attelage selon la revendication 3, **caractérisé en ce que** la caméra (30) est portée par un support de bloc de palier (31) qui vient en prise avec l'un des blocs de palier (21a).

5. Couplage de sellette d'attelage selon la revendication 4, **caractérisé en ce que** le support de bloc de palier (31) présente au moins une première section (34) orientée transversalement à l'axe longitudinal (x).

6. Couplage de sellette d'attelage selon la revendication 4 ou 5, **caractérisé en ce que** le support de bloc de palier (31) est conçu de sorte que la caméra (30) est toujours disposée à l'extérieur d'une surface projetée vers le bas de la plaque de couplage (10).

7. Couplage de sellette d'attelage selon la revendication 1 ou 2, **caractérisé en ce que** l'élément de palier (20) est une traverse de bloc de palier (22) reliant deux blocs de palier (21a, 21b).

8. Couplage de sellette d'attelage selon la revendication 7, **caractérisé en ce que** la caméra (30) est disposée sur la traverse de bloc de palier (22) entre les blocs de palier (21a, 21b).

9. Couplage de sellette d'attelage selon la revendication 7 ou 8, **caractérisé en ce que** la caméra (30) est portée par un support de traverse de bloc de palier (32) qui vient en prise avec la traverse de bloc de palier (22).

10. Couplage de sellette d'attelage selon la revendication 1 ou 2, **caractérisé en ce que** l'élément de palier (20) est un pont de palier (23) avec lequel la plaque de couplage (10) est maintenue sur un bloc de palier (21a, 21b).

11. Couplage de sellette d'attelage selon la revendication 10, **caractérisé en ce que** le pont de palier (23) traverse le bloc de palier dans le sens transversal (y) et est vissé sur la face inférieure (14) de la plaque de couplage (10).

12. Couplage de sellette d'attelage selon la revendication 10 ou 11, **caractérisé en ce que** la caméra (30) est portée par un support de pont de palier (33) qui vient en prise avec le pont de palier (23).

13. Couplage de sellette d'attelage selon la revendication 1 ou 2, **caractérisé en ce que** l'élément de palier (20) est une plaque de montage (24).

14. Couplage de sellette d'attelage selon la revendication 13, **caractérisé en ce que** la caméra (30) est fixée sur une face supérieure (25) de la plaque de montage (24).

15. Couplage de sellette d'attelage selon la revendication 13 ou 14, **caractérisé en ce que** la caméra (30) est disposée sous l'une des brides d'insertion (13a).
